## Europäisches Patentamt

## European Patent Office

## Office européen des brevets

(19)

(11) Veröffentlichungsnummer: **0 003 813**
**B1**

(12) **EUROPÄISCHE PATENTSCHRIFT**

(45) Veröffentlichungstag der Patentschrift: 29.07.81

(21) Anmeldenummer: 79100466.6

(22) Anmeldetag: 17.02.79

(51) Int. Cl.³: **A 01 K 5/02,** A 23 N 17/00, A 01 D 90/10, B 01 F 7/24, B 65 G 33/26

(54) Vorrichtung zum Aufbereiten und Fördern von Viehfutter.

(30) Priorität: 20.02.78 DE 2807107

(43) Veröffentlichungstag der Anmeldung:
05.09.79 Patentblatt 79/18

(45) Bekanntmachung des Hinweises auf die Patenterteilung:
29.07.81 Patentblatt 81/30

(84) Benannte Vertragsstaaten:
BE FR GB IT NL

(56) Entgegenhaltungen:
DE - A - 1 607 237
DE - A - 1 607 776
DE - C - 459 744
FR - A - 2 127 598
FR - A - 2 219 750
FR - A - 2 237 563
GB - A - 1 150 662
US - A - 2 864 593
US - A - 3 185 449
US - A - 3 285 581
US - A - 4 026 529

(73) Patentinhaber: **Firma Bernard van Lengerich**
**D-4441 Emsbüren (DE)**

(72) Erfinder: **Altgilbers, Bernhard**
**Pappelweg 2**
**D-4441 Emsbüren (DE)**

(74) Vertreter: **Hoefer, Theodor, Dipl.-Ing.**
**Kreuzstrasse 32**
**D-4800 Bielefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Vorrichtung zum Aufbereiten und Fördern von Viehfutter

Die Erfindung betrifft eine Vorrichtung zum Aufbereiten und Fördern von Viehfutter (von Futtermitteln) mit einem Fahrgestell und einem von dem Fahrgestell getragenen und mit diesem einen Wagen bildenden Mischbehälter, in welchem eine senkrechte Förderschnecke drehbar gelagert und über ein Zahnradgetriebe mit einer Antriebswelle verbunden ist, wobei der Mischbehälter in seiner Bodenplatte eine Auswurföffnung hat, die zu einer Verteileinrichtung führt.

Zu den Futterarten für Rinder in den Ställen landwirtschaftlicher Betriebe gehören Grundfutterarten, wie Silomais, Grassilage, Rübenblattsilage und Rapssilage und Kraftfutter, wie Getreide, Schrot und Getreideprodukte. Die bisher übliche Futterverteilung in den Ställen erfolgt weitgehend von Hand, wobei die Silage aus dem Silo entnommen und mit einem Schlepper zum Stall transportiert wird. Dort muß das Silagefutter aus dem Futtergang von Hand verteilt werden. Das Kraftfutter kann nur zusätzlich in den Futtertrog gegeben werden. Ein Mischen der verschiedenen Grundfutterarten mit dem Kraftfutter ist dabei nicht möglich. Daher drängen sich in einem Boxenlaufstall die starken Tiere zuerst an den Trog und nehmen das höherwertige Kraftfutter für sich in Anspruch, während die schwächeren Tiere nicht genügend mit Kraftfutter versorgt werden. Es wird daher angestrebt, die verschiedenen Grundfutterarten mit Kraftfutter zu mischen und dann dieses Gemisch in den Trog zu geben.

Aus der US-Patentschrift 4 026 529 ist eine Vorrichtung der eingangs genannten Art bekannt, deren Förderschnecke im Mischbehälter von einem rohrförmigen Kanal umgeben ist, der den Raum der Förderschnecke von dem übrigen Raum des Mischbehälters trennt. Daher können mit dieser Vorrichtung wohl bestimmte unterschiedliche Futterarten gemischt werden, nicht jedoch langfaseriges Material, wie Grassilage, Rapssilage oder Rübensilage.

Aus der US-Patentschrift 3 285 581 ist ein Mischer bekannt, an dessen senkrechter Förderschnecke innerhalb eines konischen Mischbehälterteiles waagerecht abstehende Rührarme gleicher Länge angeordnet sind. Diese Rührarme reichen nur in einen geringen Teil des konischen Mischbehälterteiles hinein, so daß sie am Mischvorgang nicht wesentlich teilnehmen.

Es ist aus der DE-Patentschrift 459 744 auch schon bekannt, unter dem Vorratsbehälter einer fahrbaren Futterfördervorrichtung ein Förderband als Verteilervorrichtung anzuordnen. Diese Futterfördervorrichtung ist jedoch nicht als Mischvorrichtung verschiedener Futterarten ausgebildet.

Der Erfindung liegt die Aufgabe zugrunde, die Vorrichtung zum Aufbereiten und Fördern unterschiedlicher Futterarten so weiterzubilden, daß auch Grundfutterarten, wie Gras-, Raps- und Rübensilage oder ähnliche langfaserige Materialien mit Kraftfutter in einem einzigen Arbeitszyklus gleichmäßig vermischt werden können und daß die Mischung in einfacher Weise an die Futtertröge transportiert, dort bereitgehalten und in die Tröge eingefüllt werden kann.

Diese Aufgabe wird erfindungsgemäß dadurch gelöst, daß an der Förderschnecke ansich bekannte radial abstehende Rührarme in senkrechten Abständen untereinander angeordnet sind, die verschiedene Armlängen aufweisen und in den Innenraum des sich nach unten verjüngenden, mit der verschließbaren Auswurföffnung ausgestatteten Mischbehälters hineinragen, der zwischen Förderschnecke und Mantel einen Ringraum als Mischraum freiläßt.

Bevorzugt ist die Auswurföffnung mittels eines an der Bodenplatte des Mischbehälters angeordneten Schiebers verschließbar. Die Verteileinrichtung ist als Förderband ausgebildet. Dieses kann bevorzugt mit der an dem Fahrgestellt angeordneten Antriebswelle verbunden sein.

Ein Ausfuhrungsbeispiel der Erfindung ist in der Zeichnung dargestellt und wird im folgenden näher beschrieben Es zeigen:

Fig. 1 eine Seitenansicht der Vorrichtung;
Fig. 2 eine Vorderansicht der Vorrichtung; jedoch ohen Deichselteil;

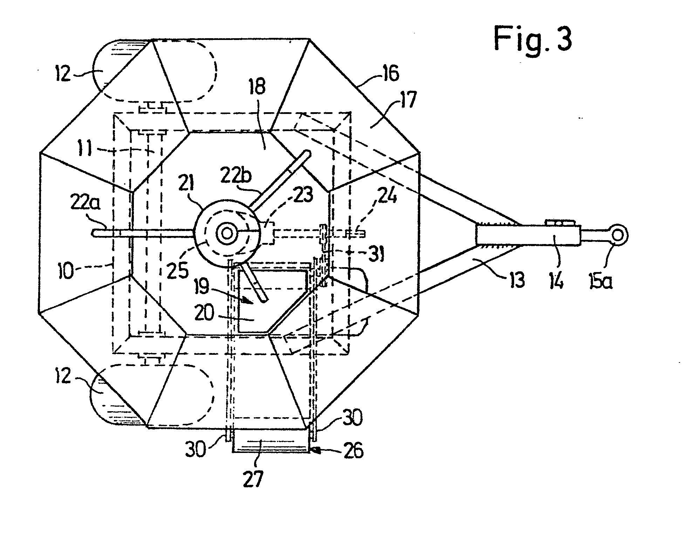

Fig. 3 eine Draufsicht auf die Vorrichtung, ohne Stützrolle.

Die erfindungsgemäße Vorrichtung ist ein Wagen, dessen Fahrgestell aus einem Rohrrahmen 10 besteht. Dieser ist von einer Fahrzeugachse 11 getragen, an deren beiden Enden zwei Hauptträder 12 gelagert sind. Die Fahrzeugachse 11 ist an einem Ende des Rohrrahmens 10 und an dessen anderem Ende eine Deichsel 13 mit einem Deichselholm 14 befestigt. Aus dem Deichselholm 14 ragt ein Zugmaul 15a in Fahrtrichtung heraus, mit dem der Wagen an eine Zugmaschine angekoppelt werden kann. Im Bereich der Deichsel 13 wird der Wagen mit Hilfe eines Stützrades 15 am Boden abgestützt, so daß sich eine Dreipunktabstützung ergibt, nämlich über die beiden Hauptträder 12 und das Stützrad 15.

Der Rohrrahmen 10 trägt einen Mischbehälter 16, dessen Mantel 17 sich nach oben erweitert. Der Mischbehälter 16 ist oben geöffnet und unten mit Hilfe einer Bodenplatte 18 verschlossen, welche die Form eines gleichseitigen Achtecks hat. Dementsprechend ist der Mantel 17 ein Kegelstumpf mit achteckiger Grundfläche. In der Bodenplatte 18 ist eine Auswurföffnung 19 vorgesehen, die mit Hilfe eines daran gelagerten, waagerecht verschiebbaren Schiebers 20 zu öffnen und zu schließen ist.

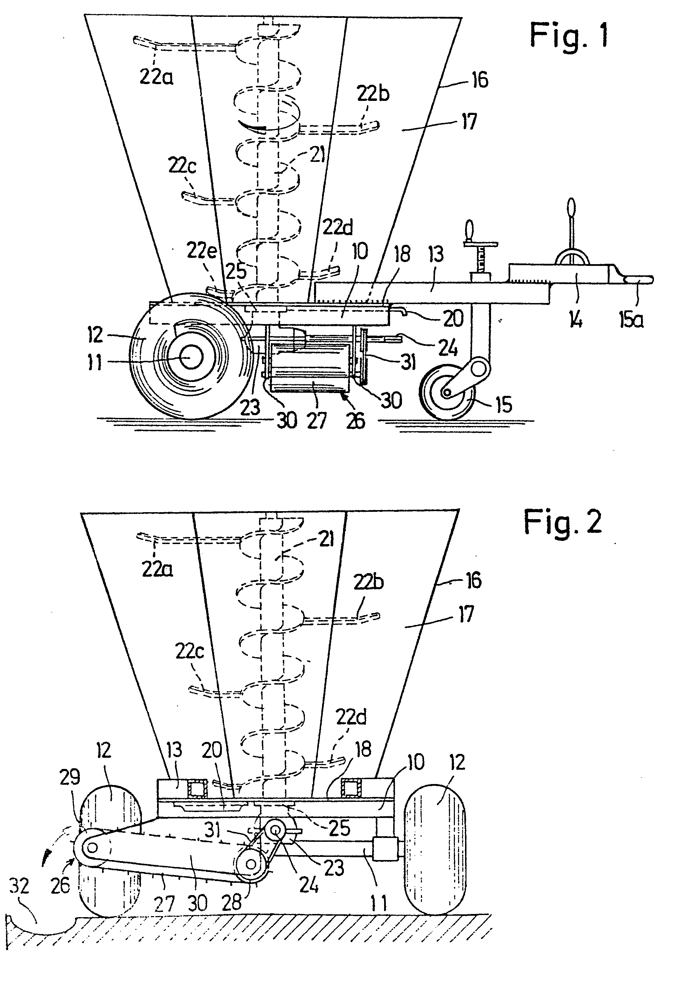

Im Inneren des Mischbehälters 16 ist mit senkrechter Achse eine Förderschnecke 21 drehbar gelagert, die zum Aufwärtsfördern eines Teiles des in dem Mischbehälter 16 befindlichen Futters dient. Dieser Vorgang wird ausgeführt, wenn sich die Förderschnecke 21 in Richtung des Pfeiles gemäß Fig. 1 dreht. Nach oben gefördertes Futter fällt in den Ringraum zwischen Förderschnecke 21 und Mantel 17 herab, so daß ein Mischvorgang durchgeführt wird. Zur Unterstützung des Mischvorganges sind mehrere Rührarme 22a—22e in Abständen voneinander an der Förderschnecke 21 befestigt; sie stehen in radialer Richtung von der Achse der Förderschnecke 21 ab und ragen in den Innenraum des Mischbehälters 16 hinein. Die Enden der Rührarme sind etwa abgewinkelt angeordnet. Die Achse der Föderschnecke 21 fällt mit der senkrechten Mittellinie des konischen Mischbehälters 16 zusammen.

Die Welle der Förderschnecke 21 wird an ihrer Unterseite mit Hilfe eines Zahnradgetriebes 23 angetrieben, welches seine Antriebsleistung von einer Antriebswelle 24 erhält, die als eine Zapfwelle ausgebildet von der Zugmaschine aus in Drehung versetzt wird. Das Zahnradgetriebe 23 ist an der Unterseite der Bodenplatte 18 mit Hilfe eines Flansches 25 befestigt.

Unterhalb der Auswurföffnung 19 des Mischbehälters 16 ist mit seinem Aufgabeende ein Förderband 26 angeordnet, dessen Gurt 27 endlos ausgeführt und von einer inneren Spannrolle 28 und einer äußeren Spannrolle 29 gehalten ist. Die beiden Achsen der Spannrollen 28 und 29 verlaufen parallel und senkrecht zur Fahrzeugachse 11, so daß das Förderband 26 eine Futtermenge, die durch die Auswurföffnung 19 auf sein Aufgabeende gelangt, aus dem Bereich des Wagens heraus etwa parallel zur Richtung der Fahrzeugachse 11 an eine Außenseite des Wagens fördern kann. Dazu ist es erforderlich, eine der beiden Spannrollen 28 und 29 anzutreiben. Die Spannrollen sind in Seitenschildern 30 gelagert. Die angetriebene Spannrolle ist die innere Spannrolle 28 und erhält über einen Riemenantrieb 31 ihre Antriebsleistung ebenso wie die Förderschnecke 21 von der Antriebswelle 24. Das Förderband 26 wird also ebenfalls von der Zugmaschine aus angetrieben.

Mit Hilfe der erfindungsgemäßen Vorrichtung läßt sich eine Grundfutterat und ein Kraftfutter in der gewünschten Weise mischen, lagern und so an einen Trog 32 heranfahren, daß es bequem von der Abwurfstelle des Förderbandes 26 in den Trog 32 abgeworfen werden kann. Die gewünschte Menge wird dabei mit Hilfe des Schiebers 20 dosiert. Die senkrechte Anordnung der Förderschnecke 21 als Rührwerk hat eine sehr gute Arbeitsweise und ermöglicht eine billige mechanische Ausgestaltung. Sie ist wesentlich wirksamer, als es horizontal angeordnete Schnecken als Rührwerk sein könnten.

## Patentansprüche

1. Vorrichtung zum Aufbereiten und Fördern von Viehfutter (von Futtermitteln) mit einem Fahrgestell und einem von dem Fahrgestell getragenen und mit diesem einen Wagen bildenden Mischbehälter (17), in welchem eine senkrechte Förderschnecke (21) drehbar gelagert und über ein Zahnradgetriebe (23) mit einer Antriebswelle (24) verbunden ist wobei der Mischbehälter (17) in seiner Bodenplatte (18) eine Auswurföffnung (19) hat, die zu einer Verteilereinrichtung führt, dadurch gekennzeichnet, daß an der Förderschnecke (21) mehrere ansich bekannte radial abstehende Rührarme (22) in senkrechten Abständen untereinander angeordnet sind, die verschiedene Armlängen aufweisen und in den Innenraum des sich nach unten verjüngenden, mit der verschließbaren Auswurföffnung (19) ausgestatteten Mischbehälters (16) hineinragen, der zwischen Förderschnecke (21) und Mantel (17) einen Ringraum als Mischraum freiläßt.

2. Vorrichtung nach Anspruch 1, dadurch gekennzeichnet, daß die Auswurföffnung (19) mittels eines an der Bodenplatte (18) des Mischbehälters (16) angeordneten Schiebers (20) verschließbar ist.

3. Vorrichtung nach den Ansprüchen 1 und 2, dadurch gekennzeichnet, daß die Verteileinrichtung als Förderband (26) ausgebildet ist.

4. Vorrichtung nach Anspruch 3, dadurch gekennzeichnet, daß das Förderband (26) mit der an dem Fahrgestell angeordneten Antriebswelle (24) verbunden ist.

## Revendications

1. Dispositif de préparation et de transport du fourrage (aliments pour bétail) avec un châssis et, porté par le châssis et formant avec ce dernier un wagon, un container-mélangeur, (16) dans lequel une hélice transporteuse verticale (21) est montée sur pivot et est reliée à un arbre moteur (24) au moyen d'un engrenage (23), le container-mélangeur (16) ayant, dans sa plaque de base (18), un trou de sortie (19), qui conduit à un dispositif de distribution caractérisé par le fait que, sur l'hélice transporteuse (21), plusieurs bras de mélangeur (22) connus en soi pour être distants radialement sont disposés à intervalles verticaux les uns en dessous des autres. Ces bras de mélangeur présentent différentes longueurs de bras et entrent à l'intérieur du container-mélangeur (16) se rétrécissant vers le bas, équipé d'un trou de sortie (19) pouvant être obturé. Le container-mélangeur laisse libre un espace circulaire au titre de salle de mélange entre l'hélice transporteuse (21) et l'enveloppe (17).

2. Dispositif d'après spécification 1, caractérisé par le fait que le trou de sortie (19) peut être obturé au moyen d'une coulisse (20) disposée sur la plaque de base (18) du container-mélangeur (16).

3. Dispositif d'après spécifications 1 et 2, caractérisé par le fait que le dispositif de distribution est développé à titre de courroie de transport (26).

4. Dispositif d'après spécification 3, caractérisé par le fait que la courroie de transport (26) est reliée à l'arbre moteur disposé sur le châssis.

## Claims

1. Device for preparation and conveyance of cattle fodder (fodder material) with a chassis and a mixing container (17) supported by the chassis and forming a cart with it in which a vertical feedscrew (21) is rotatably mounted and is connected via a gear drive (23) to a drive shaft (24), whereby the mixing container (17) has in its base panel (18) an ejection opening (19) which leads to a distribution device characterised in that on the feedscrew (21) are mounted several radially projecting stirrer arms (22), known as such, at vertical intervals from one another which have different arms lengths and project into the interior of the downward tape-ring mixing container (16) fitted with a closable ejector opening (19), an annular space being left between feedscrew (21) and casing (17) as mixing area.

2. Device according to claim 1 characterised in that the ejector opening (19) is closable by means of a slide (20) located on the base panel (18) of mixing container (16).

3. Device according to claims 1 and 2 characterised in that the distribution device takes the form of a conveyor belt (26).

4. Device according to claim 3 characterised in that the conveyor belt (26) is connected to the drive shaft (24) located on the chassis.

Fig. 1

Fig. 2

0 003 813

Fig. 3